# EUROPEAN PATENT SPECIFICATION

(11) **EP 1 366 859 B1**
(45) Date of publication and mention of the grant of the patent: **24.08.2005**
(21) Application number: 03425333.6
(22) Date of filing: 23.05.2003
(51) Int. Cl.: B24B 31/10, B24B 35/00, B24B 19/00, B24B 57/04

(54) **Polishing apparatus and method**
Verfahren und Vorrichtung zum Polieren
Procédé et appareil de polissage

(30) Priority: 27.05.2002 IT LU20020007
(43) Date of publication of application: 03.12.2003
(73) Proprietor: Della Tommasina, Vittorio, 55057 Seravezza (Lucca) (IT)
(72) Inventor: Della Tommasina, Vittorio, 55057 Seravezza (Lucca) (IT)
(74) Representative: Barberi, Vittorio

(56) References cited:
- EP-A- 0 484 532
- EP-A- 0 562 807
- US-A- 4 258 505

## Description

The present invention refers to a process and a machine for polishing turned objects made of stone, marble, granite and similar materials, as per the preamble of claims 1 and 9. An example of such a process and machine is disclosed by EP 484532A.

In particular, the invention refers to a process and an automatic machine able to polish raw objects of marble, stone, granite and the like, worked by a lathe.

Presently, the polishing of turned object such as pots, columns, fountain parts, etc., is carried out by hand. The raw object is driven into motion on a lathe, then, an operator carries out the polishing by pressing upon the same object abrasive papers having increasingly finer grit. The final polishing is made by using special sponges, soaked with polish salts, which must be kept pressed on the object for a few minutes.

In the past, attempts have been made to automate the operation, but with limited success; the machines being constructed were actually hydraulic lathes provided with a polishing head. This head simulated the pressure exerted by the man's hand which, by sliding from one side to the other onto the object, would press the abrasive throughout. However, the final result was disappointing as the object would loose its initial shape, specially in case of delicate forms or pattern in which circular steps were present whose angle had to be maintained well defined.

Moreover, the polishing times were very long and the operation always required the intervention of an operator in order to change the abrasives.

These machines are still in use but only for polishing simple cylindrical columns of large dimensions.

The document EP-A-484 532 discloses a machine for polishing turned objects made of stone, marble, granite and similar materials comprising a hermetically closable box, means able to drive said objects into rotation inside said box and a plurality of tanks or abrasive sources and/or polishing substances and/or water, connectable one at a time to said box so as to determine correspondingly different effects on the object under treatment.

The main object of the present invention is to overcome the said drawbacks by providing a process and a machine for automatically polishing turned object made from marble, granite and the like, while maintaining all the object's features and with moderate operating times and costs.

This result has been achieved, according to the invention, by adopting the idea of making a machine and devising a process having the features of the independent claims. Further characteristics being set forth in the dependent claims.

The advantages deriving from the present invention lie essentially in the fact that the polishing of the object is fully automatic; that the polishing speed is high; that the quality of the work is absolute; that the polished object maintains perfectly its original shape whatever it is; that the ambient pollution is minimized; that the operators' working conditions result improved; that the production costs are reduced; that a machine according to the invention is relatively simple to make, cost-effective and reliable even after a prolonged service life.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 shows schematically an exemplary embodiment of a polishing machine according to the present inventions;
- Fig. 2A is a schematic perspective view of a possible embodiment of an airtight box to be used according to the invention;
- Fig. 2B shows a detail of Fig. 2A in enlarged scale;
- Fig. 3A is a schematic perspective view of a possible embodiment of a mandrel according to the invention;
- Fig. 3B is a schematic perspective view of a possible embodiment of a tailstock to be used according to the invention;
- Fig. 4 shows schematically a further exemplary embodiment of a polishing machine according to the present invention;
- Fig. 5 shows schematically still another exemplary embodiment of a polishing machine according to the present invention.

With reference to the figures of the attached drawings, wherein several parts are not to scale and are shown only schematically, the present invention provides, in general, that the object be disposed on a lathe whose working area is circumscribed inside an airtight box. As the object to be polished rotates inside the airtight box, a high pressure pump sucks abrasive fluids from a plurality of tanks and let them one at a time into the airtight box until the latter is filled up. Once the operator-preset pressure is reached, and the time necessary for the abrasion is elapsed, the abrasive mixer goes back to the container by means of a high-pressure pump which may be either the same as previously used or a different pump provided for this purpose. The cycle is repeated several times and each time a tank holding a different abrasive fluid is used by passing from the most to the least abrasive. A final cycle may be provided for putting polishing salts into the said box, the salts allowing the object to be definitely polished. Between the application of one fluid and the next, an airtight box-cleaning cycle may be carried out for the purpose of elimintaing residual abrasives produced in the preceding cycle.

In an alternative embodiment, the method provides for putting the object under work in contact with a plurality of abrasives held in movable tanks, the same tanks being able to be hermetically mated with a semi-box in order to form the airtight box inside which the object is worked while being supported, also in this case, by a lathe.

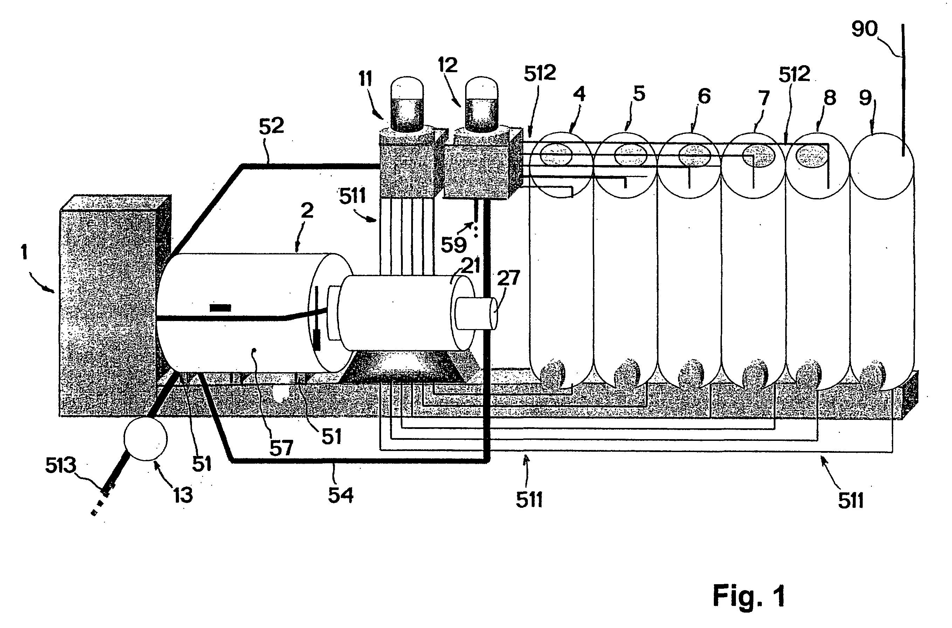

Shown in Fig. 1 is an openable airtight container or box (2) which defines the working area of a lathe.

The object to be polished is inserted inside this box (2), by blocking it between a turning mandrel and relevant tailstock. In Fig. 1, numeral (1) designates a block which represents the driving part of a lathe, that is, the part provided with a motor for the mandrel.

At this point the airtight container or box (2) is closed and the automatic polishing cycle begins.

The machine of Fig. 1 is provided with six tanks (4, 5, 6, 7, 8, 9); the first four tanks (4, 5, 6, 7) are intended for holding abrasive fluids of different abrasive grade. For example, use can be made of abrasive fluids containing abrasive grits of different sizes. In fact, the chipping power of a type of abrasive grit is proportional to the size of the latter; in other words, the larger the grit, the higher the chipping power. By way of example, and reference being made to Fig. 1, four types of grit may be used: grade 36 (coarse), grade 120 (medium), grade 220 (fine) and 400 grade (the latter leading the object to be fully lapped) . In practice, in the first four tanks (4, 5, 6, 7) the abrasive mixtures are entered in sequence, from the coarse to the finest one. The fifth tank (8) holds the polishing fluid. The sixth tank (9) holds water to be used between one step and the next for cleaning the airtight box (2) by removing the residues of the previous grit.

The tanks (4, 5, 6, 7, 8, 9) are connected with two pumps (11) and (12) which are, in turn, connected with the airtight box (2).

In the first place, the object to be treated is disposed inside the box (2) and is then driven into rotation by the lathe.

Upon starting the cycle, the first pump (11) moves the content of the first tank (4) into the airtight box (2) until a pressure preset by the operator is reached, then, after a short time (preset by the operator) the second pump (12) moves the same fluid back into the original tank.

Afterwards, the first pump (11) is started again for drawing, this time, water from the tank (9) and letting it into the airtight box (2) for clearing the residual abrasive out of it. Emptying the cleaning water out of the airtight box can be increased and speeded up by an outflow pump (13) connectable, via the counduit (513), to a collection and disposal tank not shown. As the water is removed from the box (2), clean water is introduced into the tank (9) via the conduit (90).

The above described cycle is repeated for tanks (5, 6, 7) and, finally, for tank (8) which holds polishing salts. In this way, the polishing process is completed: the object is bright, and the machine is ready for a further treatment. Thus, according to the example illustrated in Fig. 1, the machine of the present invention makes use of two high-pressure pumps (11, 12) for a fast transfer of abrasives from the tanks to the airtight box, and vice versa.

In particular, the first pump (11) has the function of transferring (one at a time) the content of the various tanks into the airtight box (2) via the conduit (52). The pump (11) is connected to the tanks through the six conduits indicated by (511) in Fig. 1. Said pump (11) will keep pumping until the airtight box has reached the operator-preset pressure. Such pressure is evaluated each time according to two parameters: the finishing degree of the piece when starting work and the type of material it is made of. For example, the classical marbles, such as the Carrara white one, will be subjected to a pressure greatly reduced with respect to hard marbles such as the Guatemala green one or the granites. Once the desired pressure is reached, the pump (11) is stopped and, inside the airtight box (2) the piece keeps turning at high speed immersed in the abrasive fluid for a time defined by the operator.

The immersion time is also selected on the base of the object's finish. When this time has elapsed, the second pump (12) is started to take the abrasive liquid back to the original tank via the conduits (512) shown in Fig. 1. Besides, the pump (12) is activated every time the cleaning water is introduces into the airtight box to allow the proper cleaning of the conduit in common with all the tanks, that is, the conduit (54) extending from the airtight box (2) to the pump (12). The cleaning water is introduced into the airtight box (2) until a predetermined pressure, for example of 2 atm, is reached. Before reaching this pressure, however, a portion of the water is aspirated by the pump (12) for a period of time, for example about 20 sec., and discharged from a suitable outlet (59). In practice, the inlet of pump (12) is connected with the conduit (54) and the outlet of the same pump is connected with five conduits (512) and the conduit (59). It will be appreciated that means are provided for properly directing the input and output flows of pumps (11) and (12).

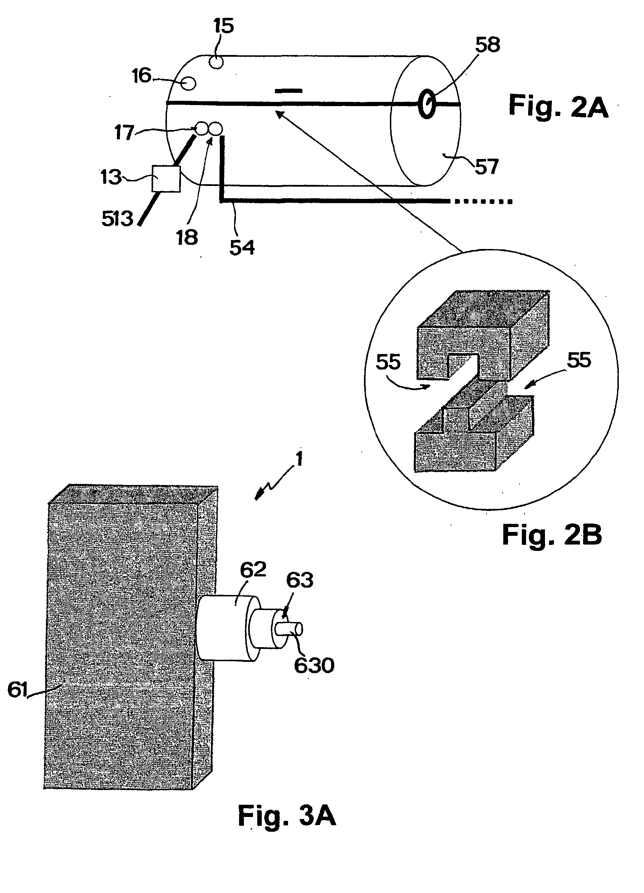

With reference to Figs. 1 and 2A, the airtight box (2) has a cylindrical shape substantially matching that of both the mandrel's head and tailstock, thereby creating a hermetic ambient able to withstand the internal pressures while preventing any leak of liquid.

The lower portion (57) of box (2) is stationary, being anchored at three beds (51), the upper portion thereof being solid both to the tailstock and the mandrel's head. The airtight box (2) is provided with an electrically-operated valve (15) allowing the introduction of operating liquids. In practice, this is a solenoid valve disposed on the walls of box (2) and operated upon the exit of liquids to allow speeding up the discharge of the cleaning water and avoiding a depression likely to occur during the introduction and exit of abrasives.

Also provided on the box (2) is a second electrically controlled valve (17) allowing the outflow of cleaning liquids; this is an outlet solenoid valve located at the bottom of the airtight cylinder (2) in correspondence of a discharge conduit (53) upon which the outflow pump (13) is made to act for accelerating the discharge of water.

A third electrically controlled valve (18) is located on the conduit (54) allowing the exit of abrasives and on which the second pump (12) is made to act. Also shown in the drawing is a fourth valve (16) which can be used, for example, for introducing water into the box (2) in order to mix the abrasive or for providing additional water independently from the pump (11).

Shown in Fig. 2B, is the particular shape of the edges (55) of the two semi-cylinders which make up the box (2). The edges (55) are so shaped as to be complementary to each other and define a constrained joint ensuring a complete sealing for the same cylinder.

The whole airtight container (2) is made of materials the thickness of which allows withstanding the internal pressure without undertaking any deformation.

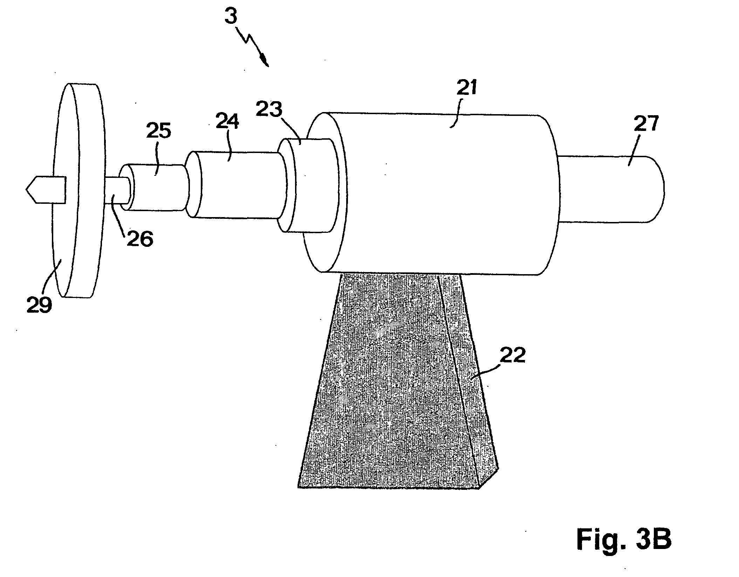

With reference to Figs. 1 and 3B, the tailstock (3) comprises a cylindrical, hollow, bearing body (21), supported by a base (22), inside which body there are provided three telescopic cylinders (24, 25, 26) connected to each other and to a hydraulic piston (27). Provision is also made for a cylindrical anchoring fixed portion (23) for engagement of the airtight box (2). In practice, the portion (23) is that part of the tailstock (3) which, by passing through the opening (58), results inside the box (2); it is understood that the opening (58) will be suitably provided with sealing gaskets. The telescopic cylinders (24, 25, 26) are pushed back and forth by the hydraulic piston (27) in order to block the object being worked. Under resting conditions, these three parts (24, 25, 26) are held in the portion (23) and body (21).

When the operator starts the hydraulic cylinder (27), the first telescopic cylinder (26) comes out of portion (23) by all its length; if the cylinder (26) does not come in contact with the object to be blocked, the second telescopic cylinder (25) comes out as well and, in the absence of contact also in this case, the third telescopic cylinder (24) is made to protrude. The length of the telescopic cylinders will be properly chosen according to the objects to be treated; for example, with three cylinders 33 cm long each, it is possible to block objects having a length ranging from 1 to 100 cm.

The hydraulic piston (27) has the function of automating the movement of the telescopic cylinders which, depending on the command, will clamp or release the object under work.

Provided on the distal end of the tailstock (3) is a plate (29) made of steel and having a diameter substantially equal to the inner port of the airtight box (2); the plate (29) allows the working environment to be optimized since, in practice, it results proportional to the length of the object to be polished. The plate (29) results disposed between said cylinders and the tailstock.

Provided along the whole outer circumference of plate (29) are two gaskets able to withstand high pressures. When the airtight cylindrical box (2) is closed, the plate (29) adheres perfectly to the inside of the same box thereby forming a sub-box which optimizes the space, reduces the working times and prevent the telescopic cylinders (24, 25, 26) from entering in contact with the abrasive substances which would damage the operation of same cylinders.

Interposed between the plate (29) and the cylinder (26) which supports it is a spring (not shown in the drawings) which keeps the same plate lifted by some millimeters; this allows the free movement of telescopic cylinders (24, 25, 26) without the plate's gaskets rubbing against the inner walls of the lower portion of airtight box (2) when the same cylinders are driven for positioning the object to be worked. Only when the container (2) is closed, the upper part of the latter pushes the plate (29) to the correct position. The plate (29) offers also the advantage of preventing any oscillation of the tailstock.

Shown in Fig. 3A is an exemplary embodiment of a turning mandrel (1); the motor block is schematically represented at (61); numeral (62) indicates a cylindrical portion for connection with the box (2), and (63) indicates the proper rotating mandrel which ends up with a threading (630) for the application of the various bearing pads for the object under work.

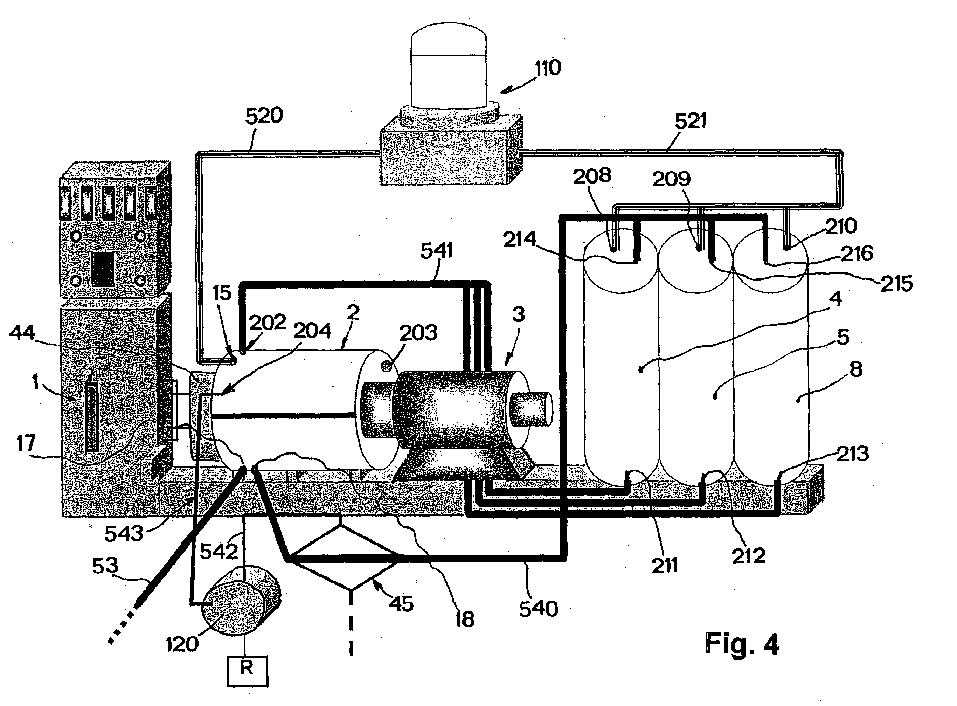

Fig. 4 shows a further embodiment of the invention in which there are some differences with respect to the example of Fig. 1 previously described.

In particular, a high-pressure pump (110) is provided which is connected with the box (2) via a conduit (520) and with a plurality of tanks (4, 5, 8) via a conduit (521). The solenoid valve (15) is made to act on the conduit (520), while the three further solenoid valves (208), (209) and (210) are provided on the three branches of conduit (521) for acting respectively, on the connection with the first (4), second (5) and third (8) tanks.

Also connected to box (2) are the conduit (53) for the discharge of water, and two conduits (540) and (541), respectively for the discharge and admission of abrasive fluids. Provided in correspondence of the box (2) on the conduit (53) is the solenoid valve (17), the solenoid valve (18) is provided on conduit (540) and solenoid valve (202) on conduit (541). On the conduit (540), and in particular on the two braches thereof connected with the tanks, solenoid valves (214), (215) and (216) are provided for, respectively, the tanks (4), (5) and (8).

Likewise, on the conduit (541), and in particular on the two braches thereof connected with the tanks, solenoid valves (211), (212) and (213) are provided, respectively, for tanks (4), (5) and (8).

In place of the water tank in the example of Fig. 1, a pump (120) is provided, connectable with the water supply network (R) and linked with the box (2) through the conduit (543) on which the solenoid valve (204) is made to act.

A filter (45) provided on conduit (540) has the function of separating the solid abrasive from the water and working residues; the filter (45) may made up of a perforated section of the conduit, sprayed with pressurized water which, in practice, detaches the scraps formed during the abrasion. The separation takes place by means of a jet of water operated by the pump (120) connected with filter (45) via the conduit (542).

Also provided is a motor-driven vibrator (44) acting on the box (2) for preventing the solid abrasive from remaining attached to the object and thus altering the shape of the latter.

The displacement of the abrasive fluids is performed by the pump (110) which operates a vacuum, as will appear more evident from the description that follows.

After placing the object to be polished between the mandrel (1) and tailstock (3), the motor of mandrel (3) is started to drive the latter into rotation at a speed suitable for the size of the same object. Then the box (2) is tight-closed, the tanks to be used are selected by means of electronic control system, and the motor-driven vibrator (44) is started.

Valves (15), (202) and (211) opened, and the pump (110) begins pumping the abrasive into the airtight box (2) until the latter is filled up to 80% of its volume. The abrasive moves through the conduit (541) owing to the vacuum operated by the pump (110). The said valves (15), (202) and (211) are then closed.

At this point the solenoid valve (204) opens up and the pump (120) delivers water into the box (2) until it is filled, while also applying the pressure preset by the operator. Upon completion of the treatment with the abrasive fluid of the first tank (4), the valves (18), (208) and (214) open, and the pump (110) takes the abrasive back into the tank (4) by causing the same abrasive to transit through the conduit (540).

At the end of the outflow, the same valves (18), (208) and (214) are closed.

At this point, in order to clean the box (2), the valve (204) is opened to bring water inside thereof, and valve (203) is opened as well to prevent the formation of vacuum inside the same box. When the pump (120) has completed the filling with water, the valve (203) is closed, while the valve (17) opens up to allow the discharge of cleaning water, and is then closed upon completion of the discharge.

The above described cycle is repeated for tanks (5) and (8).

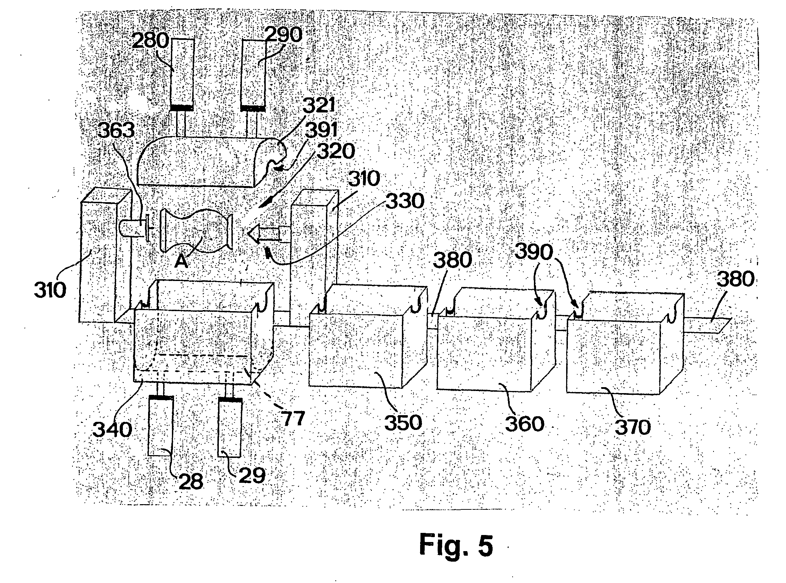

Shown in Fig. 5 is a further exemplary embodiment of the invention.

In this example, there are provided tanks (340, 350, 360 and 370) movable along a rail (380) and containing abrasives and/or polishing substances. The tanks (340, 350, 360 and 370) are so shaped as to complementary match with a lid (321) and thus defining a box (320) which, as will be described later, has a function similar to that of box (2) of the previous examples. The lathe unit (shown only schematically, likewise the other elements), comprises a mandrel (363) and a tailstock (330), mounted on a support structure (310). The lid or semi-box (321) can be lifted and lowered, by means of two cylinders (280) and (290), relative to the support structure (310) so as be coupled with one of tanks (340, 350, 360 and 370). In practice, the tanks (340, 350, 360 and 370), by moving bidirectionally along the rail (380), can be positioned sequentially under the lathe unit (310), in correspondence of which the lid (321) is lowered by the two hydraulic pistons (280, 290) thereby defining a tight-closed box (320). The tanks (340, 350, 360 and 370) are provided with shaped portions (390) along their upper edge for sealingly receiving, with the aid of gaskets not shown, corresponding portions of mandrel (363) and tailstock (330) ; the lid (321) also exhibiting relevant shaped portions (391) along its lower edge.

The mandrel (363) and tailstock (330) are not described since they can be constructed as in the previous examples.

The tanks (340, 350, 360 and 370) can be either movable along the rail (380) or solid thereto, the rail being made to translate in the latter case.

Advantageously, the said tanks (340, 350, 360 and 370) are provided with a motor-driven vibrator which facilitates the admission of the object to be polished into a tank and, besides, prevents the object from being damaged by the immobility of the abrasives during the abrasion. The motor-driven vibrator is of known type, so that it is not shown in the drawings. Also provided are pistons (28) and (29) acting on the tank's base (77) (shown only for tank 340 by a dashed line) which is movable relative to the same tank; Once the box (320) is closed, that is, the lid or semi-box (321) has been lowered onto a tank and closed thereto, the base (77) of the same tank moves up. This allows the airtight box (320) - being formed by the junction of the lid (321) with the tank - to be filled completely. The lifting of the tank's bottom stops when the desired inner pressure is reached. Obviously, interposed between the base (77), the tank and pistons (28), (29) suitable sealing means (not shown) are provided.

In a possible work cycle like that of the example of Fig. 5, the object (A) to be polished is first fitted on the lathe unit and then blocked, as in the previous examples, between the mandrel (363) and tailstock (330), below said lid (321).

According to a program, a selection is made of the tanks to be used by entering values relevant to work times, suitable pressures, etc. (As indicated above, the selection depends on the type and conditions of the material).

The object is driven into the most suitable rotation (which depends on the diameter of the same object), that is, it is rotated at a number of revolutions which is considered the optimal one.

From now on, as described later, the machine will carry out a whole work cycle automatically.

The first tank (for example, the tank 340) begins to vibrate and is positioned below the lid or semi-box (321) which comes down onto the tank (340) until it forms a lid-tank assembly that defines the box (320).

The bottom (77) of the tank goes up by fully immersing the object (A) being worked into the abrasive, until the operator-preset pressure is reached. These conditions are maintained for a predetermined time. When this time has elapsed, the lid (321) is lifted and a rinse cycle is carried out to eliminate the residual abrasive possibly still present under the lid (321).

The above described operations are repeated also for the other tanks (350, 360 and 370) being selected, until the treatment of the object is completed and the machine is ready for a fresh cycle.

The advantages of the present invention result evident from the above. A first advantage is that the polishing of the object is fully automatic, the only intervention of the operator being that of replacing the polished piece with another to be treated.

A further advantage is that the polishing speed is high; in fact, the pressure of the abrasive is applied all around the object and not on a single point, as occurs nowdays, and such pressure is higher than the one manually applied: the combination of these two advantages leads to a significant reduction of the operation times.

The quality of the work is absolute: in fact, as it has been ascertained, since a perfect polishing requires the application of a large force throughout the working steps and, above all, on the final stage when the polishing salts are applied, the present invention makes it possible to apply a very large force by means of the high-pressure pump being used.

A further advantage is that the polished object maintains perfectly its original shape whatever it is; this result is obtained since, contrary to the known techniques in which the abrasive is applied on a solid support, the present invention allows performing a polishing by using a mixture of water and abrasives able to perfectly reach and work the smallest part of the object's profile, thus achieving the best result regardless of its shape.

Moreover, the ambient pollution is significantly reduced with respect to the manual polishing which, especially upon the first abrasive stage, produces fine powders that even the most advanced aspirators are unable to abate completely; with the present invention, instead, this side-effect is not created, since the operation takes place inside an airtight box whose wastes end up in the polls of the factory's recirculation water.

Moreover, the production costs are reduced; this because the abrasive used is a product being marketed at an industrtial level, and has a relatively low price if compared with the advantages being gained, contrary to the presently used abrasive dishes and papers, whose price is higher owing to the cost of the support on which the abrasive must be attached. Moreover, the abrasive mixture being used is recovered all the time and taken back to the original tank which, therefore, is very seldom fed therewith.

The health problems concerning those operators who perform manual polishing and come in contact with very dangerous powders, are overcome; in addition, the hard physical fatigue caused by this work is a thing of the past.

The members for handling, driving controlling the elements above described and illustrated in the attached drawings are of a type well known to those skilled in the industrial automation and, therefore, are not described in greater details.

## Claims

1. Process for polishing turned objects made of stone, marble, granite and similar materials comprising the following operating steps:
- placing an object to be polished inside a hermetically closable box (2; 320), supported by a lathe (1; 3; 310; 330; 363) or similar apparatus able to drive it into rotation about an axis; **characterized by**
- subjecting the same object, inside said box (2; 320), to the action of a plurality of abrasives of different abrasive power, in succession one at a time, at a pressure and for a time which are preset for correspondingly determining different effects on the object under treatment.

2. Process according to claim 1, **characterized in that** it comprises the following operating steps:
- placing an object to be polished inside a hermetically closable box (2; 320), supported by a lathe (1; 3; 310; 330; 363) or similar apparatus able to drive it into rotation about an axis;
- closing said box (2);
- inserting into the box (2), one at a time, a plurality of abrasives of different abrasive power, at a pressure and for a time which are preset for correspondingly determining different effects on the object under treatment.

3. Process according to claim 1, **characterized in that** it comprises the following operating steps:
- placing an object to be polished inside a hermetically closable box (2; 320), supported by a lathe (1; 3; 310; 330; 363) or similar apparatus able to drive it into rotation about an axis;
- closing the said box (320) by moving close to the box, one at a time, a plurality of tanks (340, 350, 360, 370) containing abrasives of different abrasive power, at a pressure and for a time which are preset for correspondingly determining different effects on the object under treatment.

4. Process according to claim 1, **characterized in that** abrasives are made to act upon the object according to a succession determined by their decreasing abrasive power.

5. Process according to claim 1, **characterized in that** it includes washing with water at the end of each single treatment with abrasives.

6. Process according to claim 1, **characterized in that** it includes a final treatment with polishing substances.

7. Process according to claim 2, **characterized in that** it includes subjecting said box (2) to a vibration.

8. Process according to claim 3, **characterized in that** it includes subjecting said tanks (340, 350, 360, 370) to a vibration.

9. Machine for polishing turned objects made of stone, marble, granite and similar materials comprising:
- a hermetically closable box (2; 320);
- means (1, 3; 310, 363, 330) able to drive said objects into rotation inside said box (2; 320);
- a plurality of tanks or abrasive sources (4, 5, 6, 7; 340, 350, 360, 370) and/or polishing substances (8) and/or water (9; R), connectable one at a time to said box (2; 320) so as to determine correspondingly different effects on the object under treatment; machine **characterized in that** it comprises:
- a box (2) composed of two hermetically closable portions;
- means (1, 3) able to drive said objects into rotation inside said box (2);
- a plurality of conduits able to connect said box (2) to a plurality of tanks or abrasive sources (4, 5, 6, 7) and/or polishing substances (8) and/or water (9; R);
- one or more pumps (11, 12; 13; 110, 120) disposed and acting between said box (2) and at least one of said tanks or abrasive sources (4, 5, 6, 7, 8, 9, R) in order to bidirectionally move the substances between the box and the tanks or sources.

10. Machine according to claim 9 **characterized in that** said box (320) is made up in part of one of said tanks (340, 350, 360, 370) which are matchable, one at a time, with a lid (321).

11. Machine according to claim 9 **characterized in that** it comprises means (44) able to cause said box (2) to vibrate.

12. Machine according to claim 10 **characterized in that** it comprises means able to cause said tanks (340, 350, 360, 370) to vibrate.

13. Machine according to claim 9 **characterized in that** said means (1, 3; 310,363, 330) comprise a mandrel unit (1; 363) and a tailstock (3; 330), said mandrel unit (1; 310) being provided with motor means (61), a portion (62) for connection with box (2; 320) and a rotating mandrel (63; 363) able to be received inside the box (2; 320) and on which the various bearing pads for the object under work can be applied; said tailstock (3; 330) comprising a body (21) supporting a plurality of telescopic cylinders (24, 25, 26) associated with a hydraulic piston and able to be housed inside said box (2) and be extended relative to the length of the object to be supported.

14. Machine according to claim 13 **characterized in that** on the distal end of the tailstock (3) a plate (29) is disposed of a diameter substantially equal to the inner port of the airtight box (2) so as to vary the volume utilized inside the box according to the length of the object to be polished.

## Patentansprüche

1. Verfahren zum Polieren von gedrehten Objekten, die aus Stein, Marmor, Granit und ähnlichen Materialien hergestellt sind, wobei das Verfahren folgende Schritte umfasst:
• Einbringen eines zu polierenden Objekts in einen hermetisch verschließbaren Kasten (2; 320) so, dass es von einer Drehmaschine (1; 3; 310; 330; 363) oder einer ähnlichen Vorrichtung getragen ist, die geeignet ist, es für eine Drehung um eine Achse anzutreiben,
**dadurch gekennzeichnet, dass**
• dieses Objekt innerhalb des Kastens (2; 320) nacheinander jeweils der Wirkung eines aus einer Vielzahl von Schleifmitteln mit unterschiedlicher Schleifkraft bei einem Druck und über einen Zeitraum hinweg unterworfen wird, die vorgegeben werden, um in entsprechender Weise unterschiedliche Effekte an dem zu bearbeitenden Objekt zu bewirken.

2. Verfahren nach Anspruch 1, **dadurch gekennzeichnet, dass** es folgende Arbeitsschritte umfasst:
• Positionieren eines zu polierenden Objekts in einem hermetisch verschließbaren Kasten (2; 320) so, dass es von einer Drehmaschine (1; 3; 310; 330; 363) oder einer ähnlichen Vorrichtung getragen wird, die in der Lage ist, es für eine Drehung um eine Achse anzutreiben,
• Verschließen des Kastens (2),
• nacheinander erfolgendes Einführen jeweils eines einer Vielzahl von Schleifmitteln mit unterschiedlicher Schleifkraft in den Kasten mit einem Druck und über einen Zeitraum hinweg, die vorgegeben werden, um in entsprechender Weise unterschiedliche Effekte an dem zu bearbeitenden Objekt zu erzielen.

3. Verfahren nach Anspruch 1, **dadurch gekennzeichnet, dass** es folgende Arbeitsschritte umfasst:
• Positionieren eines zu polierenden Objekts in einem hermetisch verschließbaren Kasten (2; 320) so, dass es von einer Drehmaschine (1; 3; 310; 330; 363) oder einer ähnlichen Vorrichtung getragen ist, die in der Lage ist, es für eine Drehung um eine Achse anzutreiben,
• Verschließen des Kastens (320) **dadurch**, dass jeweils einer aus einer Vielzahl von Tanks (340, 350, 360, 370) nahe an den Kasten heranbewegt wird, die Schleifmittel mit unterschiedlicher Schleifkraft enthalten, bei einem Druck und über einen Zeitraum hinweg, die vorgegeben werden, um in entsprechender Weise unterschiedliche Effekte an dem zu bearbeitenden Objekt zu erzielen.

4. Verfahren nach Anspruch 1, **dadurch gekennzeichnet, dass** die Schleifmittel so ausgewählt werden, dass sie auf das Objekt in einer Reihenfolge einwirken, die durch ihre abnehmende Schleifkraft festgelegt ist.

5. Verfahren nach Anspruch 1, **dadurch gekennzeichnet, dass** es am Ende einer jeden einzelnen Behandlung mit einem Schleifmittel einen mit Wasser durchgeführten Waschvorgang umfasst.

6. Verfahren nach Anspruch 1, **dadurch gekennzeichnet, dass** es eine abschließende Behandlung mit Poliersubstanzen umfasst.

7. Verfahren nach Anspruch 2, **dadurch gekennzeichnet, dass** es den Schritt umfasst, den Kasten (2) einer Vibration auszusetzen.

8. Verfahren nach Anspruch 3, **dadurch gekennzeichnet, dass** es den Schritt umfasst, besagte Tanks (340, 350, 360, 370) einer Vibration auszusetzen.

9. Maschine zum Polieren von gedrehten Objekten aus Stein, Marmor, Granit und ähnlichen Materialien, die folgende Bestandteile umfasst:
• einen hermetisch verschließbaren Kasten (2; 320),
• Einrichtungen (1, 3; 310; 363, 330), die in der Lage sind, die Objekte innerhalb des Kastens (2; 320) für eine Drehung anzutreiben,
• eine Vielzahl von Tanks oder Quellen für Schleifmittel (4, 5, 6, 7; 340, 350, 360, 370) und/oder Poliersubstanzen (8) und/oder Wasser (9; R), von denen jeweils einer mit dem Kasten (2; 320) verbindbar ist, um so entsprechend unterschiedliche Effekte an dem in Bearbeitung befindlichen Objekt zu bewirken,
wobei die Maschine **dadurch gekennzeichnet ist, dass** sie folgende Bestandteile umfasst:
• einen Kasten (2), der aus zwei hermetisch schließbaren Teilen besteht,
• Einrichtungen (1, 3), die in der Lage sind, das Objekt innerhalb des Kastens (2) für eine Drehung anzutreiben,
• eine Vielzahl von Leitungen, die in der Lage sind, den Kasten (2) mit einer Vielzahl von Tanks oder Quellen für Schleifmittel (4, 5, 6, 7) und/oder Poliersubstanzen (8) und/oder Wasser (9; R) zu verbinden,
• eine oder mehrere Pumpen (11, 12; 13; 110, 120), die zwischen dem Kasten (2) und wenigstens einem der Tanks oder Quellen für Schleifmittel (4, 5, 6, 7, 8, 9, R) angeordnet sind und arbeiten, um bidirektional diese Substanzen zwischen dem Kasten und den Tanks oder Quellen zu bewegen.

10. Maschine nach Anspruch 9, **dadurch gekennzeichnet, dass** der Kasten (320) teilweise aus einem der Tanks (340, 350, 360, 370) besteht, die jeweils mit einem Deckel (321) verschließbar sind.

11. Maschine nach Anspruch 9, **dadurch gekennzeichnet, dass** sie Einrichtungen (44) umfasst, die in der Lage sind, den Kasten (2) in Schwingungen zu versetzen.

12. Maschine nach Anspruch 10, **dadurch gekennzeichnet, dass** sie Einrichtungen umfasst, die in der Lage sind, die Tanks (340, 350, 360, 370) in Schwingungen zu versetzen.

13. Maschine nach Anspruch 9, **dadurch gekennzeichnet, dass** die Einrichtungen (1; 3; 310, 363, 330) eine Spindeleinheit (1; 363) und einen Reitstock (3; 330) umfassen, wobei die Spindeleinheit (1; 310) Motoreinrichtungen (61), ein Teil (62) zur Verbindung mit dem Kasten (2; 320) und eine sich drehende Spindel (63; 363) umfasst, die in dem Kasten (2; 320) aufgenommen werden kann und auf der die verschiedenen Träger für das zu bearbeitenden Objekt angebracht werden können, wobei der Reitstock (3; 330) einen Körper (21) umfasst, der eine Vielzahl von Teleskopzylindem (24, 25, 26) trägt, die einem hydraulischen Kolben zugeordnet sind und innerhalb des Kastens (2) untergebracht und relativ zur Länge des zu tragenden Objekts verlängert werden können.

14. Maschine nach Anspruch 13, **dadurch gekennzeichnet, dass** am distalen Ende des Reitstocks (3) eine Platte (29) mit einem Durchmesser angeordnet ist, der im wesentlichen gleich der inneren Öffnung des luftdichten Kastens (2) ist, um so das innerhalb des Kastens genutzte Volumen entsprechend der Länge des zu polierenden Objekts zu variieren.

## Revendications

1. Procédé pour le polissage d'objets tournés réalisés en marbre, pierre et similaires, comprenant les phases opérationnelles suivantes:
- disposer un objet à polir à l'intérieur d'une embrasure (2; 320) qu'on peut fermer hermétiquement, supporté par un tour à pierres (1; 3; 310; 330; 363) ou similaire instrument apte à le placer en rotation autour d'un axe; **caractérisé en ce que**
- soumettre l'objet même, à l'intérieur de la dite embrasure (2; 320), à l'action d'une pluralité d'abrasifs de différent pouvoir abrasif, un à la fois en succession, à une pression et pur une période de temps préétablis pour déterminer en correspondance différents effets sur l'objet en traitement.

2. Procédé selon la revendication 1, **caractérisé en ce que** comprend les phases opérationnelles suivantes:
- disposer un objet à polir à l'intérieur d'une embrasure (2; 320) qu'on peut fermer hermétiquement, supporté par un tour à pierres (1; 3; 310; 330; 363) ou similaire instrument apte à le placer en rotation autour à un axe;
- fermer la dite embrasure (2);
- introduire dans l'embrasure (2), un à la fois, une pluralité d'abrasifs de différent pouvoir abrasif, à une pression et pour une période de temps préétablis pour déterminer en correspondance différents effets sur l'objet en traitement.

3. Procédé selon la revendication 1, **caractérisé en ce que** comprend les phases opérationnelles suivantes :
- disposer un objet à polir à l'intérieur d'une embrasure (2; 320) qu'on peut fermer hermétiquement, supporté par un tour à pierres (1; 3; 310; 330; 363) ou similaire instrument apte à le placer en rotation autour d'un axe;
- fermer la dite embrasure (320) en approchant à l'embrasure même, un à la fois, une pluralité de réservoirs (340,350,360,370) qui contiennent abrasifs de différent pouvoir abrasif, à une pression et pour une période de temps préétablis pour déterminer en correspondance différents effets sur l'objet en traitement.

4. Procédé selon la revendication 1 **caractérisé en ce que** sur l'objet des abrasifs sont fait agir selon une succession déterminée par un pouvoir abrasif décroissant.

5. Procédé selon la revendication 1 **caractérisé en ce que** on réalise un lavage avec eau au terme de chaque traitement avec les abrasifs.

6. Procédé selon la revendication 1 **caractérisé en ce que** on réalise un traitement final avec des substances polissantes.

7. Procédé selon la revendication 2 **caractérisé en ce que** on soumet à vibrations la dite embrasure (2).

8. Procédé selon la revendication 2 **caractérisé en ce que** on soumet à vibrations les dits réservoirs (340,350,360,370).

9. Machine pour le polissage d'objets tournés réalisés en marbre, pierre ou similaires comprenant:
- une embrasure (2; 320) qu'on peut fermer hermétiquement;
- des moyens (1, 3; 310, 363, 330) aptes à placer en rotation les dits objets à l'intérieur de la dite embrasure (2; 320) ;
- une pluralité de réservoirs ou source d'abrasif (4, 5, 6, 7; 340, 350, 360, 370) et/ou de substances polissantes (8) et/ou d'eau (9; R), reliables un à la fois à la dite embrasure (2, 320) de façon à déterminer, en correspondance, différents effets sur l'objet en traitement ; machine **caractérisée en ce que** comprend:
- une embrasure (2) formée de deux parties qui se referment hermétiquement ;
- des moyens (1,3) aptes a placer en rotation les dits objets à l'intérieur de la dite embrasure (2) ;
- une pluralité de conduits aptes à relier la dite embrasure (2) à une pluralité de réservoirs ou sources d'abrasifs (4, 5, 6, 7) et/ou substances polissantes (8) et/ou d'eau (9 ;R) ;
- une ou plusieurs pompes (11, 12; 13; 110, 120) disposées et agissantes entre la dite embrasure (2) et entre au moins un des dits réservoirs ou sources (4, 5, 6, 7, 8, 9, R) pour mouvoir de façon bidirectionnelle les substances entre l'embrasure et les réservoirs ou sources.

10. Machine selon la revendication 9 **caractérisée en ce que** la dite embrasure (320) est composée en partie par un de dits réservoirs (340, 350, 360, 370) les quels peuvent être accouplés, un à la fois, à un couvercle (321).

11. Machine selon la revendication 9 **caractérisée en ce que** comprend des moyens (44) aptes à mettre en vibration la dite embrasure (2).

12. Machine selon la revendication 10 **caractérisée en ce que** comprend des moyens aptes à mettre en vibration les dits réservoirs (340, 350, 360, 370).

13. Machine selon la revendication 9 **caractérisée en ce que** les dits moyens (1, 3; 310, 363, 330) comprennent un groupe-mandrin (1; 363) et une contre-pointe (3 ; 330), le dit groupe-mandrin (1; 310) étant pourvu de moyens moteur (61), d'une portion (62) de reliment à l'embrasure (2 ; 320) et d'un mandrin tournant (63, 363), logeable à l'intérieur de l'embrasure (2; 320) et sur le quel peuvent être appliqués les différents tampons d'appui pour l'objet en façonnage; la dite contre-pointe (3; 330) comprenant un corps (21) qui supporte une pluralité de cylindres télescopiques (24, 25, 26) asservis à un piston hydraulique (27), qui peuvent être logés à l'intérieur de la dite embrasure (2) et extensibles en fonction de la longueur de l'objet à supporter.

14. Machine selon la revendication 13 **caractérisée en ce que** sur l'extrémité distal de la contre-pointe (3) est disposé un plat (29) de diamètre fondamentalement égal à la lumière interne de l'embrasure hermétique (2) de façon à varier le volume utilisé à l'intérieure de l'embrasure sur la base de la longueur de l'objet à polir.
